## Europäisches Patentamt
## European Patent Office
## Office européen des brevets

(11) Veröffentlichungsnummer: **0 154 022**
**B1**

# EUROPÄISCHE PATENTSCHRIFT

(45) Veröffentlichungstag der Patentschrift:
02.09.87

(51) Int. Cl.⁴: **A 61 C 5/08**

(21) Anmeldenummer: **84115847.0**

(22) Anmeldetag: **19.12.84**

(54) Schraubstift zum Aufbau von schadhaften Zähnen.

(30) Priorität: **24.01.84 DE 8401938 U**

(43) Veröffentlichungstag der Anmeldung:
**11.09.85 Patentblatt 85/37**

(45) Bekanntmachung des Hinweises auf die Patenterteilung:
**02.09.87 Patentblatt 87/36**

(84) Benannte Vertragsstaaten:
**AT BE CH DE FR GB IT LI LU NL SE**

(56) Entgegenhaltungen:
CH-A-604 673
DE-A-2 715 689
DE-A-2 909 896
DE-B-2 225 863
DE-B-2 554 179
GB-A-1 588 235

(73) Patentinhaber: **EDENTA AG, Haupstrasse 7, CH-9434 Au/SG (CH)**

(72) Erfinder: **Grätz, Dieter, Hauptstrasse 7, CH-9434 Au/SG (CH)**

(74) Vertreter: **Liesegang, Roland, Dr.- Ing., Sckellstrasse 1, D-8000 München 80 (DE)**

## Beschreibung

Die Erfindung betrifft einen Schraubstift zum Aufbau von schadhaften, z. B. abgebrochenen Zähnen mit einem ersten Gewindeabschnitt zum Einschrauben in den Zahnkörper und einem zweiten Gewindeabschnitt zum Einschrauben in einen wiederverwendbaren Halter, wobei zwischen den beiden Gewindeabschnitten eine Sollbruchstelle vogesehen ist.

Ein bekannter Scbraubstift zum Aufbau von abgebrochenen Zähnen, Zahnecken, oder -stümpfen bildet eine Einheit mit dem Halter, d. h. ist durch eine Sollbruchstelle mit dem Halter verbunden (DE-B-25 54 179). Dabei wird der Halter mit einem zahnärztlichen Winkelstück zum gewindeschneidenden Einschrauben des Schraubstiftes in ein vorgebohrtes Loch im Zahnkörper in Drehung versetzt und nach dem Einschrauben an der Sollbruchstelle von dem Schraubstift abgetrennt. Der Halter ist Abfall und nicht wiederverwendbar. Um hier eine Verbesserung zu schaffen, ist von der Anmelderin ein Schraubstift der eingangs beschriebenen Art entwickelt worden, der ein vom Halter getrenntes Teil mit zwei Gewindeabschnitten bildet, wobei der zweite Gewindeabschnitt gewöhnlich gegenläufiges Gewinde zum ersten Gewindeabschnitt hat und in ein entsprechendes Gewinde im Halter einschraubbar ist. Nach dem Einschrauben des ersten Gewindeabschnittes wird dieser von dem zweiten Gewindeabschnitt an der Sollbruchstelle abgetrennt. Der im Halter verbleibende zweite Gewindeabschnitt läßt sich durch eine Zange aus dem Halter herausschrauben, so daß dieser wieder verwendbar ist.

Die Praxis hat gezeigt, daß ein solcher Schraubstift der beanspruchten Gattung schwer handhabbar ist. Insbesondere ist das Einschrauben eines neuen Schraubstiftes in den Halter mit den Fingern problematisch. Die Handhabung ist ferner dadurch erschwert, daß der Benutzer nicht ohne weiteres unterscheiden kann, welcher Gewindeabschnitt der beiden gleichen Durchmesser aufweisenden Gewindeabschnitt das zum Halter passende Gewinde aufweist. Schließlich ist es schwierig, bei der Herstellung die völlig gleichgearteten Schraubstiftenden gratfrei so auszubilden, daß jeder Schraubstift sich ohne weiteres in den Halter einschrauben läßt.

Der Erfindung liegt demgemäß die Aufgabe zugrunde, einen Schraubstift der eingangs beschriebenen Art zu schaffen, der leichter als der bekannte Schraubstift handhabbar ist.

Zur Lösung dieser Aufgabe ist bei einem Schraubstift der eingangs genannten Art vorgesehen, daß der zweite Gewindeabschnitt größeren Durchmesser als der erste Gewindeabschnitt hat, und daß zwischen den beiden Gewindeabschnitten ein gewindeloser Handhabungsabschnitt zum Handhaben des Schraubstiftes mit den Fingern vorgesehen ist.

Bei einem erfindungsgemäß gestalteten Schraubstift läßt sich aufgrund der unterschiedlichen Durchmesser der beiden Gewindeabschnitte eine Verwechslung dieser Gewindeabschnitte beim Einschrauben in den Halter ausschließen, sobald der Benutzer erkannt hat, daß stets der Gewindeabschnitt größeren Durchmessers in das Gewindeloch im Halter einzuschrauben ist. Dies erleichtert die Handhabung.

Diese wird noch erheblich durch den gewindelosen Handhabungsabschnitt verbessert. Der Handhabungsabschnitt ermöglicht ein Greifen des Schraubstiftes mit einem einfachen Werkzeug wie einer Pinzette oder mit den Fingern zum vereinfachten Einschrauben des Gewindeabschnittes in den Halter bzw. zum vereinfachten Herausdrehen des verbleibenden Reststückes des Schraubstiftes nach dem Abtrennen von dem im Zahnkörper eingeschraubten ersten Gewindeabschnitt.

Vorzugsweise ist der Handhabungsabschnitt zylindrisch ausgebildet und hat größeren Durchmesser als der erste Gewindeabschnitt und kleineren Durchmesser als der zweite Gewindeabschnitt.

Vorteilhaft ist die überstehende Länge des Handhabungsabschnittes nach dem Einschrauben des Schraubstiftes in den Zahnkörper zum Greifen mit den Fingern oder mit einem Werkzeug, wie einer Pinzette ausreichend bemessen.

Um das Einführen des Schraubstiftes in den Halter zu erleichtern, ist vorzugsweise vorgesehen, daß zwischen dem halterseitigen Einschraubende des Schraubstiftes und dem zweiten Gewindeabschnitt ein zylindrischer Zentrierabschnitt vorgesehen ist.

Das Einführen des Schraubstiftes sowohl in das vorgebohrte Loch im Zahnkörper als auch in das Gewindeloch im Halter wird dadurch erleichtert, daß der Schraubstift an seinen beiden Enden zugespitzt bzw. angefast ist.

Die Abmessungen der Durchmesser der beiden Gewindeabschnitte können je nach Anwendungsfall (Zahngröße, Größe des schadhaften Zahnabschnittes) variieren. Vorzugsweise liegt der Durchmesser des ersten Gewindeabschnittes im Bereich 0,4 bis 1,0 mm, während der stets größere Durchmesser des zweiten Gewindeabschnittes im Bereich 0,45 bis 2,0 mm liegen kann.

Die Erfindung ist im folgenden anhand schematischer Zeichnungen mit weiteren Einzelheiten anhand eines Ausführungsbeispieles näher erläutert. Es zeigen:

Fig. 1 einen Schraubstift gemäß der Erfindung;

Fig. 2 einen Schraubstift nach Fig. 1 eingeschraubt in einen Halter;

Fig. 3 a) bis c) drei Zustände beim Vorbereiten und Einsetzen eines Schraubstiftes in einen schadhaften Zahn

Fig. 4 einen abgewandelten Schraubstift.

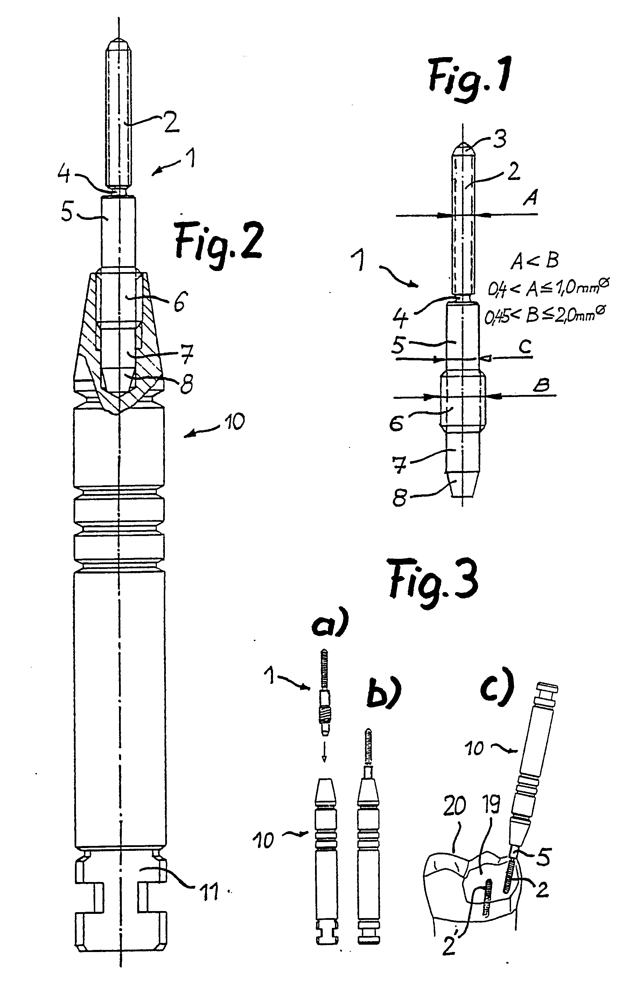

Ein in Fig. 1 dargestellter Schraubstift 1 gemäß der Erfindung weist einen ersten Gewindeabschnitt 2 zum gewindeschneidenden Einschrauben in ein vorgebohrtes Loch in einen Zahnkörper auf. An seinem Einführende weist der Gewindeabschnitt 2 eine konische Anfasung 3 auf.

Der Gewindeabschnitt 2 ist über eine Sollbruchstelle 4 mit einem Handhabungsabschnitt 5 verbunden, der größeren Durchmesser C als der Durchmesser A des Gewindeabschnittes 2 aufweist.

Der Handhabungsabschnitt 5 ist zylindrisch und glatt ausgebildet. Er kann selbstverständlich auch zum erleichterten Greifen gestaltet, z. B. gerändelt sein. Der Handhabungsabschnitt 5 hat eine solche Länge, daß auch nach dem Einschrauben des Schraubstiftes 1 in den in Fig. 2 gezeigten Halter 10 bzw. in einen schadhaften Zahn 20 gemäß Fig. 3c) eine zum Greifen des Handhabungsabschnittes 5 mittels der Finger oder mittels eines Werkzeuges, wie einer Pinzette, genügende überstehende Länge verbleibt.

An den Handhabungsabschnitt 5 schließt ein zweiter Gewindeabschnitt 6 größeren Durchmessers an, der zum Einschrauben in den Halter 10 gemäß Fig. 2 und 3 dient und vorzugsweise ein gegenläufiges Gewinde zum Gewinde des Gewindeabschnittes 2 aufweist. Vorteilhaft ist das Gewinde auf dem Gewindeabschnitt 6 ein Steilgewinde, um das Eindrehen von Hand in den Halter 10 abzukürzen.

Auf den Gewindeabschnitt 6 folgt ein wiederum zylindrischer, glattwandiger Zentrierabschnitt 7 mit einer Anfasung 8 an dem freien, zum Einführen in den Halter 10 bestimmten Ende.

In Fig. 2 ist der Schraubstift 1 in den Halter 10 eingeschraubt gezeigt. Dieses Einschrauben kann leicht von Hand durch Greifen des Schraubstiftes 1 am Handhabungsabschnitt 5 erfolgen. Der Halter 10 selbst ist von bekannter Bauart und bei dem gezeigten Beispiel zylindrisch ausgebildet. Er könnte auch über seine ganze Länge konisch ausgebildet sein, wie ebenfalls bekannt. An seinem Fuß hat der Halter ein Anschlußstück 11, das zum Einsetzen eines zahnärztlichen Winkelstückes (nicht gezeigt) in üblicher Weise ausgebildet ist.

Fig. 3a) zeigt den Schraubstift 1 in seinem noch vom Halter 10 getrennten Zustand. Durch Ausrichten mit dem Halter und Bewegen in Pfeilrichtung gemäß Fig. 3a) wird der Schraubstift 1 durch Greifen des Handhabungsabschnittes 5 mit den Fingern oder einer Pinzette oder dgl. in Pfeilrichtung gemäß Fig. 3a) in den Halter 10 eingeführt und mit diesem verschraubt. Den eingeschraubten Zustand zeigt nochmals die Fig. 3b). Sodann wird nach Ansetzen eines Winkelstückes oder dgl. am Anschlußstück 11 des Halters 10 dieser in ein vorgebohrtes Loch in der Bruchstelle 19 eines abgebrochenen Zahnes 20 eingesetzt und durch Drehen des Halters 10 gewindeschneidend eingeschraubt. Nach Erreichen des Grundes des vorgebohrten Loches bricht der Schraubstift an der Sollbruchstelle 4 ab, wie dies bei dem bereits eingeschraubten Gewindeabschnitt 2' dargestellt ist. Im Halter 10 verbleibt ein Reststück mit den Abschnitten 5 bis 8 des Schraubstiftes, wobei der Handhabungsabschnitt 5 allein noch aus dem Halter 10 hervorragt. Durch Drehen des Handhabungsabschnittes 5 läßt sich das Reststück leicht mit den Fingern oder unter Zuhilfenahme eines Werkzeuges aus dem Halter 10 herausschrauben, so daß dieser zum Einsetzen eines neuen Schraubstiftes 1 bereit ist.

Der Schraubstift nach der Erfindung kann in bekannter Weise aus einem Cr-Stahl oder aus Titan bestehen. Er kann auch vergoldet sein.

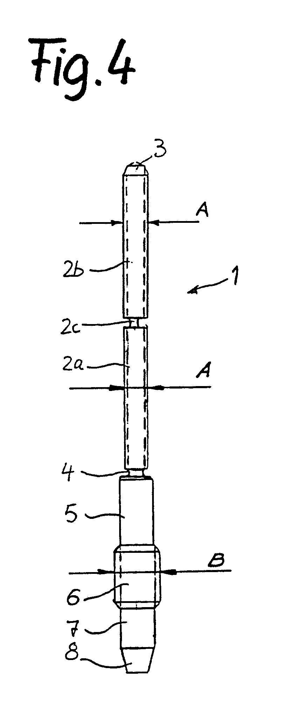

Fig. 4 zeigt einen abgewandelten Schraubstift, der sich von demjenigen nach Fig. 1 lediglich dadurch unterscheidet, daß der Gewindeabschnitt 2-teilig mit zwei Unterabschnitten 2a, 2b ausgebildet ist, die durch eine Sollbruchstelle 2c verbunden sind. Letztere ist schwächer als die Sollbruchstelle 4. Auf diese Weise verfügt der Zahnarzt mit jedem Gewindestift 1 über zwei Armierungsteile 2a, 2b, die zur Befestigung einer schadhaften Stelle in der Regel ausreichen.

**Patentansprüche**

1. Schraubstift (1) zum Aufbau von schadhaften Zähnen mit einem ersten Gewindeabschnitt (2) zum Einschrauben in den Zahnkörper und einem zweiten Gewindeabschnitt (6) zum Einschrauben in einen wiederverwendbaren Halter (10), wobei zwischen den beiden Gewindeabschnitten (2, 6) eine Sollbruchstelle (4) vorgesehen ist, dadurch gekennzeichnet, daß der zweite Gewindeabschnitt (6) größeren Durchmesser (B) als der erste Gewindeabschnitt (2) hat und daß zwischen den beiden Gewindeabschnitten (2, 6) ein gewindeloser Handhabungsabschnitt (5) zum Handhaben des Schraubstiftes mit den Fingern vorgesehen ist.

2. Schraubstift nach Anspruch 1, dadurch gekennzeichnet, daß der Handhabungsabschnitt (5) größeren Durchmesser (C) als der erste Gewindeabschnitt (2) und kleineren Durchmesser als der zweite Gewindeabschnitt (6) hat.

3. Schraubstift nach Anspruch 1 oder 2, dadurch gekennzeichnet, daß die überstehende Länge des Handhabungsabschnittes (5) nach dem Einschrauben des Schraubstiftes (1) in den Zahnkörper (20) zum Greifen mit den Fingern oder mit einem Werkzeug, wie einer Pinzette, ausreichend bemessen ist.

4. Schraubstift nach einem der Ansprüche 1 bis 3, dadurch gekennzeichnet, daß zwischen seinem halterseitigen Einschraubende (8) und dem zweiten Gewindeabschnitt (6) ein zylindrischer Zentrierabschnitt (7) vorgesehen ist.

5. Schraubstift nach einem der Ansprüche 1 bis 4, dadurch gekennzeichnet, daß er an seinen beiden Enden (3, 8) zugespitzt bzw. angefast ist.

6. Schraubstift nach einem der Ansprüche 1 bis 5, dadurch gekennzeichnet, daß der Durchmesser (A) des ersten Gewindeabschnitts (2) im Bereich 0,4 bis 1,0 mm liegt.

7. Schraubstift nach einem der Ansprüche 1 bis 6, dadurch <u>gekennzeichnet</u>, daß der Durchmesser (B) des zweiten Gewindeabschnittes (6) im Bereich 0,45 bis 2,0 mm liegt.

8. Schraubstift nach einem der Ansprüche 1 bis 7, dadurch <u>gekennzeichnet</u>, daß der erste Gewindeabschnitt (2) zweiteilig mit Unterabschnitten (2a, 2b) ausgebildet ist, die durch eine schwächer als die Sollbruchstelle (4) ausgebildeten Sollbruchstelle (2c) verbunden sind.

## Claims

1. Screw pin (1) for reconstructing decayed teeth having a first threaded section (2) for screwing into the body of a tooth and a second threaded section (6) for screwing into a reuseable holder, a predetermined breaking point (4) being provided between the two threaded sections (2, 6), characterised in that the second threaded section (6) has a larger diameter (B) than the first threaded section (2) and that between the two threaded sections (2, 6) an unthreaded handling section (5) is provided for handling the screw pin with the fingers.

2. Screw pin as claimed in claim 1, characterised in that the handling section (5) has a larger diameter (C) than the first threaded section (2) and a smaller diameter than the second threaded section (6).

3. Screw pin as claimed in claim 1 or 2, characterised in that the projecting length of the handling section (5) after screwing the screw pin (1) into the tooth body (20) is adecuately dimensioned to be gripped with the fingers or with a tool, such as tweezers.

4. Screw pin as claimed in one of claims 1 to 3, characterised in that a cylindrical centering section (7) is provided between its end (8) closest to the holder and the second threaded section (6).

5. Screw pin as claimed in one of claims 1 to 4, characterised in that it is pointed or chamfered at both its ends (3, 8).

6. Screw pin as claimed in one of claims 1 to 5, characterised in that the diameter (A) of the first threaded section (2) is in the range 0.4 to 1.0mm.

7. Screw pin as claimed in one of claims 1 to 6, charaterised in that the diameter (B) of the second threaded section (6) is in the range 0.45 to 2.0mm.

8. Screw pin as claimed in one of claims 1 to 7, characterised in that the first threaded section (2) is constructed in two parts with sub-sections (2a, 2b) which are connected by a predetermined breaking point (2c) which is constructed weaker than the predetermined breaking point (4).

## Revendications

1. Tenon fileté (1) pour la reconstitution de dents abîmées, avec une première partie filetée (2) destinée à être vissée dans le corps de la dent et une deuxième partie filetée (6) destinée à être vissée dans un manche (10) réutilisable, une zone préaffaiblie de rupture (4) étant prévue entre les deux parties filetées (2, 6), caractérisé en ce que la deuxième partie filetée (6) a un diamètre supérieur à celui de la première partie filetée (2) et qu'il est prévu entre les deux parties filetées (2, 6) une partie de manipulation (5) non filetée pour le maniement avec les doigts du tenon fileté.

2. Tenon fileté selon la revendication 1, caractérisé en ce que la partie de manipulation (5) a un diamètre (C) supérieur à celui de la première partie filetée (2) et inférieur à celui de la deuxième partie filetée (6).

3. Tenon fileté selon la revendication 1 ou 2, caractérisé en ce que la longueur saillante de la partie de manipulation (5) après le vissage du tenon fileté (1) dans le corps d'une dent (2) a une dimension suffisante pour sa préhension avec les doigts ou avec un outil comme une petite pince.

4. Tenon fileté selon l'une des revendications 1 à 3, caractérisé en ce qu'il est prévu entre son extrémité de vissage (8) côté manche et la deuxième partie filetée (6) une partie de centrage (7) cylindrique.

5. Tenon fileté selon l'une des revendications 1 à 4 caractérisé en ce qu'il est taillé en pointe ou chanfreiné à ses deux extrémités (3, 8).

6. Tenon fileté selon l'une des revendications 1 à 5, caractérisé en ce que le diamètre (A) de la première partie filetée (2) est de 0,4 à 1,0 mm.

7. Tenon fileté selon l'une des revendications 1 à 6, caractérisé en ce que le diamètre (B) de la deuxième partie filetée (6) est de 0,45 à 2,0 mm.

8. Tenon fileté selon l'une des revendications 1 à 7, caractérisé en ce que la première partie filetée (2) est elle-même composée de deux parties avec des sous-sections (2a, 2b) qui sont reliées par une zone de rupture (2c) plus faible que la zone de rupture (4).

0 154 022

*Fig.1*

$A < B$

$0,4 < A \leq 1,0\,mm\,\varnothing$

$0,45 < B \leq 2,0\,mm\,\varnothing$

*Fig.2*

*Fig.3*

a)

b)

c)

1

# Fig.4